# EUROPEAN PATENT SPECIFICATION

(11) **EP 0 813 008 B1**
(45) Date of publication and mention of the grant of the patent: **24.10.2001**
(21) Application number: 97109501.3
(22) Date of filing: 11.06.1997
(51) Int. Cl.: F16J 15/12, F02F 11/00

(54) **Heat engine**
Brennkraftmaschine
Moteur thermique

(30) Priority: 12.06.1996 IT BO960322
(43) Date of publication of application: 17.12.1997
(73) Proprietor: MAGNETI MARELLI S.p.A., 20145 Milano (IT)
(72) Inventor: Serra, Gabriele, 40068 S. Lazzaro Di Savena (IT)
(74) Representative: Jorio, Paolo

(56) References cited:
- EP-A- 0 622 622
- DE-A- 4 207 495
- DE-A- 4 230 374
- DE-A- 4 311 838
- DE-C- 4 300 237
- US-A- 5 380 014

## Description

The present invention relates to a heat engine.

It is known that in the field of heat engines normal used for the propulsion of vehicles the rotation of the drive shaft is achieved by means of at least one thrust-imparting crank mechanism which is contained within such engines and which is actuated by the violent combustion of a mixture of inflammable gases.

Corresponding to such an expansion is the initiating of a reciprocating movement of a piston of the crank mechanism and said movement is converted, as is known, into the rotation of said drive shaft. It is known that to maximise the mechanical work which can be obtained at the drive shaft it is necessary to control and optimise the values of a large number of parameters of a physical and chemical nature, normally known by the expression "automotive parameters". Of course, the most important event to control is that as a result of which the crank mechanism derives the energy necessary for its movement, i.e. the combustion of the mixture. For this purpose it is known from EP 622 622 and from DE 43 11 838 to provide the engine with a plurality of sensors of varying type, including sensors for pressure, temperature and analysis of the gases which form the residue of combustion. The critical nature of the ambient conditions inside the engine (in particular inside known the combustion chamber), and the delicate nature of the sensors has made it necessary for said sensors to be enclosed within casings which are normally of such dimensions that they cannot be used in direct contact with the environment to be controlled. Moreover, the cost of the casing is almost always higher than the cost of the sensor contained therein.

With respect to the foregoing, these sensors are normally positioned in areas of the engine in relation to which said automotive parameters can be evaluated only indirectly, and this makes it necessary for the data-collection processor to be disposed at a considerable distance from said sensors. This means that the processor can be reached by the signals sent by the sensors only via electric connecting wires which, owing to their inherent characteristics, can overwhelm the information signals. It may be readily understood that, inevitably, the data available to the processor are affected by noise, so that in order to be usable they require electronic processing, otherwise the quality of the information content of the signals themselves will decay.

The object of the present invention is to devise a heat engine which does not suffer from the above-mentioned drawbacks.

The present invention relates to a heat engine as claimed in Claim 1.

The invention will now be described with reference to the accompanying drawings which illustrate a non-restrictive example of embodiment, wherein:
- Figure 1 is a schematic view in perspective, partly in section and with parts omitted for greater clarity, of an engine in accordance with the present invention, and
- Figure 2 is a plan view of a detail taken from Figure 1.

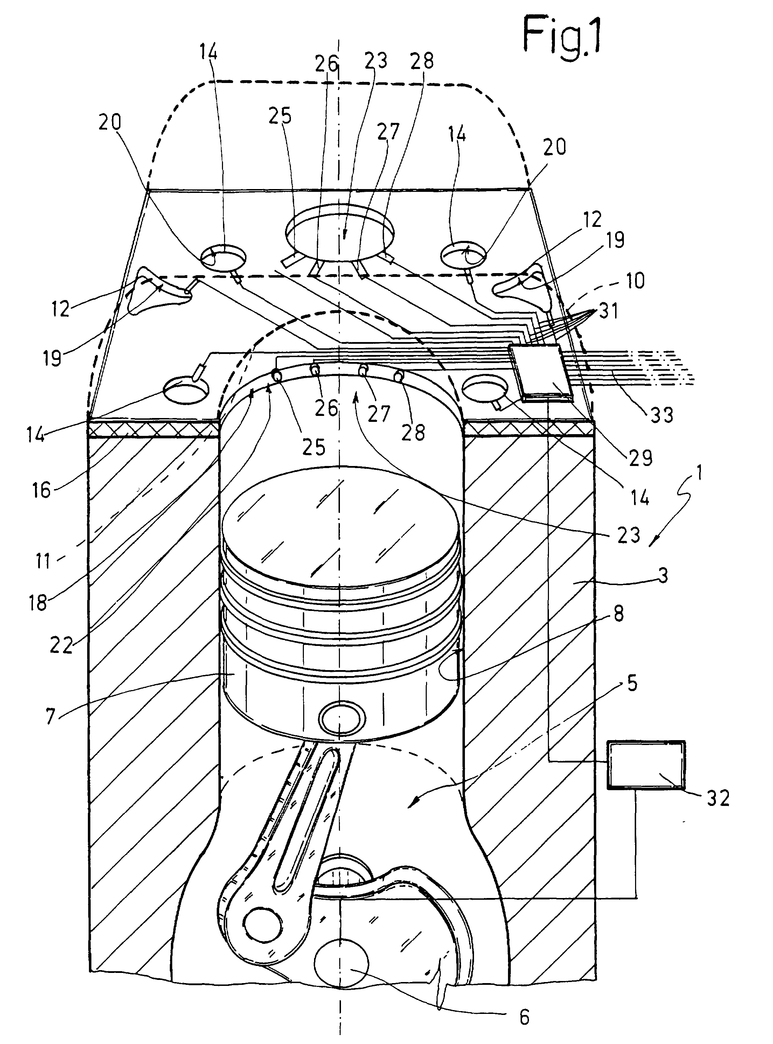

In Figure 1 the reference numeral 1 generally denotes a heat engine of the type normally used for the propulsion of vehicles, for example automobiles.

The engine 1 comprises an engine block 3, inside which is contained an actuating assembly comprising a thrust-imparting crank mechanism 5 adapted to impart rotating motion to a drive shaft 6.

The crank mechanism 5 comprises at least one piston 7 moving in rectilinear and reciprocating motion inside the block 3, and in particular inside a respective cylinder 8. Said cylinder 8 is open towards the exterior on the opposite side with respect to the shaft 6, and it is adapted to accommodate the piston 7 in a freely displaceable manner; it is closed by a cover or cylinder head 10 which is provided with a recess or combustion chamber 11 which faces the cylinder 8 itself. Said chamber 11 is adapted to receive in its interior an inflammable petrol-air mixture and to contain said mixture in its interior during the respective combustion.

The block 3 and the cylinder head 10 are provided with an internal passage 12 inside which flows the liquid for controlling the temperature under operating conditions, and with an internal passage 14 inside which the lubricating oil flows, which is fed through the passage 14 towards the drive shaft 6 and other moving parts of the engine.

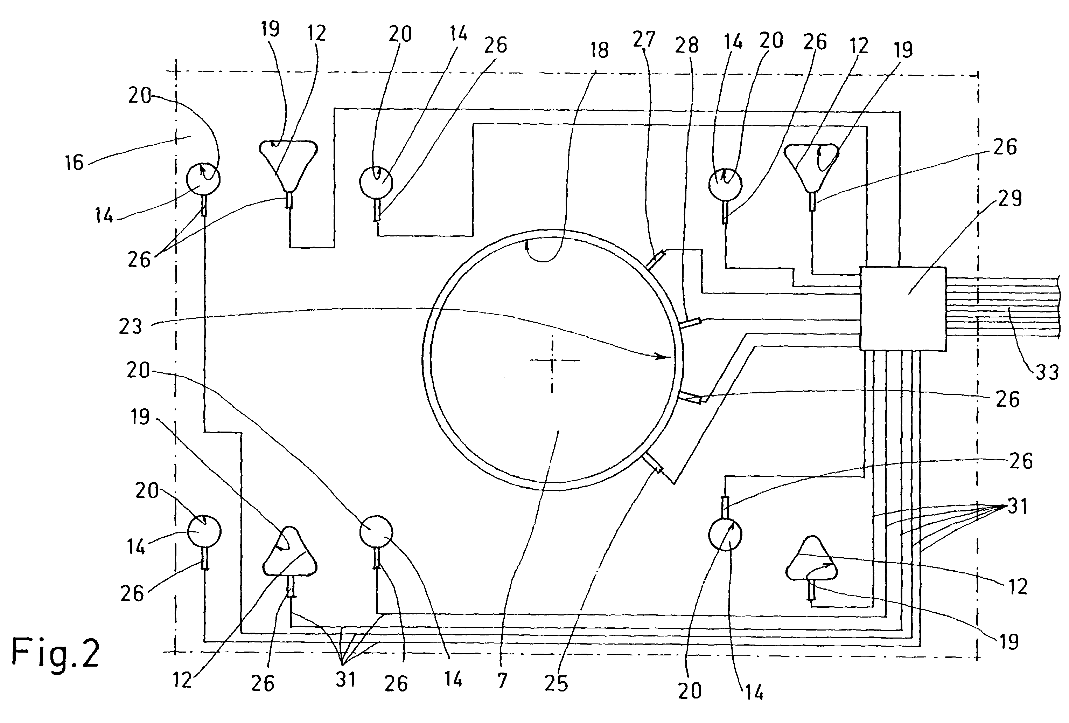

The connection between the cylinder head 10 and the block 3 must be hermetic so as to prevent any leak of the aforementioned liquids and, above all, of the expanding gases by means of which movement energy is transmitted to the crank mechanism 5. Therefore, between the cylinder head 10 and the block 3 the engine 1 has a gasket 16 (Figure 2), which is formed by a flat body made of multilayer composite material and which has a plurality of openings, each of which enables the block 3 to be kept open towards the cylinder head 10 in alignment with each cylinder 8 and with the passages 12 and 14. In particular, the gasket 16 has an opening 18 in alignment with each cylinder 8 and openings 19 and 20 in alignment with the passages 12 and 14. The opening 18 is defined laterally by an annular surface 22 of a diameter which is close to but exceeds the bore of the piston 7.

As is known, each combustion chamber 11 is bounded at the bottom by the piston 7 and at the sides and at the top by the cylinder head 10.

It is also known that the rotation of the shaft 6 is induced by the violent combustion of an air-petrol (fuel-combustion agent) mixture in the combustion chamber 11 , as a result of which the piston 7 is urged from the known top dead centre-position (not shown) into the known bottom dead-centre position (not shown). With a view to collecting in a direct manner the so-called automotive parameters, the gasket 16 incorporates a plurality of sensors 23 of siliceous type, each of which is disposed on the edge of the surface 22 facing the environment of the combustion chamber 11. In particular, the plurality of sensors 23 comprises a pressure sensor 25, a temperature sensor 26, a carbon dioxide (CO₂) sensor 27, an oxygen (O₂) sensor 28 for measuring the proportion of oxygen in the exhaust gas.

The plurality of sensors 23 comprises further temperature sensors 26 incorporated in the gasket 16. In particular, the gasket 16 accommodates a sensor 26 in alignment with each of the openings 19 and 20 so as to enable the temperature of the cooling and lubricating liquids to be monitored. The gasket 16 further incorporates between the cylinder 8 and the two passages 12 and 14 an electronic control processor 29 and a plurality of tracks 31 for electrical connection between the sensors 23 and the processor 29 itself. Said processor 29 is electrically connected to a sensor 32 which is interfaced with the shaft 6 so that its angular position can be determined instantaneously so as to make it possible for the data received from the plurality of sensors 23 to be timed and for said data to be co-ordinated with the current condition of the engine 1. The siliceous nature of the plurality of sensors 23 and multilayer nature of the gasket 16 makes it possible to form the plurality of sensors 23, the processor 29 and the tracks 31, or a respective active part, by application of siliceous material on one or more layers of the gasket 16 itself. Furthermore, said gasket 16 has a single electric connecting cable 33 comprising a feed channel adapted to supply electrical power to the plurality of sensors 23. Said cable 33 further comprises at least one electric communication channel connected to the processor 29, by way of which said plurality of sensors 23 and the processor 29 receive electrical power supply and by way of which the processor 29 itself exchanges the data received from the plurality of sensors 23 with the exterior.

It is evident from the foregoing that the use of the gasket 16 makes possible a substantial reduction in the length of the electric cables and, on the other hand, an improvement in the quality of the corresponding signals. Moreover, the gasket 16 makes it possible to measure directly a very high number of automotive parameters, which normally cannot be monitored in conventional engines and which can only be collected indirectly on the basis of calculation algorithms defined in a statistical manner. Accordingly, at substantially reduced cost and with a definite simplification of the measurement sequence, it is possible transfer to any engine 1 the precision instrumentation which is substantially identical to that used in the laboratory for the study of engines. After all, the engine 1 can be kept under observation whilst in use under any operating condition, with obvious advantages for the user resulting from the improvement in the capacity to monitor the engine 1 itself.

Furthermore, the correlation of the data received from the pressure sensor 25 and the sensor 32 makes it possible to plot the indicator diagram, namely the graph of useful work produced by the engine 1 in one cycle as a function of the stroke of the drive shaft 6. The knowledge of this relationship makes it possible to provide a wide range of sensors, including a sensor adapted to measure the quantity of fresh charge returned by the piston 7 into the interior of the chamber 11; a stroke sensor adapted to detect which of the cylinders is in the compression stroke; an angular sensor adapted to define accurately the angle of the drive shaft in alignment with which the ignition of the mixture takes place; a detonation sensor; a so-called incomplete-combustion sensor adapted to evaluate the quantity of fresh charge which is discharged unburnt from the engine.

Additionally, the presence of the temperature sensor 26 inside the chamber 11 makes it possible to keep a constant check on the combustion temperature which, combined with the data on the quantity of fresh charge introduced into the chamber 11, makes it possible to evaluate the combustion efficiency and the exhaust gas temperature.

Moreover, the presence of the temperature sensor 26 in contact with the cooling and lubricating liquids which circulate in the passages 12 and 14 makes it possible for information to be made constantly available regarding the respective temperature.

## Claims

1. A heat engine (1) comprising an engine block (3) which is hollow on the inside and an actuating assembly (5) contained inside said block (3), and comprising at least one piston (7) moving in reciprocating motion inside said block (3), and a drive shaft (6) kinetically connected with said piston (7); a cylindrical cavity (8) adapted to accommodate said piston (7) in a freely displaceable manner; a member (10) for closing said block (3) rigidly connected to said block (3) so as close said cylindrical cavity (8); a gasket (16) disposed between said block (3) and the closure member (10) so as to close off said cylindrical cavity (8) hermetically; a chamber (11) provided inside said closure member (10) and facing said cylindrical cavity (8) so as to contain an inflammable mixture; and a plurality of sensors (23) for measuring parameters of a physicochemical type; **characterised in that** said gasket (16) incorporates at least one electronic control unit (29) connected to said sensors (23).

2. An engine according to claim 1, **characterised in that** at least one sensor of said plurality of sensors (23) is arranged so as to be facing said chamber (11).

3. An engine according to claim 1 or 2, **characterised in that** said plurality of sensors (23) comprises at least one pressure sensor (25).

4. An engine according to claim 1 or 2, **characterised in that** said plurality of sensors (23) comprises at least one temperature sensor (26).

5. An engine according to claim 1 or 2, **characterised in that** said plurality of sensors (23) comprises at least one sensor (27) for the chemical composition of the combustion gases.

6. An engine according to claim 1 or 2, **characterised in that** said plurality of sensors (23) comprises at least one sensor (28) for measuring the proportion of oxygen (O₂) in the exhaust gases.

7. An engine according to claim 1 or 2, **characterised in that** said plurality of sensors (23) comprises at least one temperature sensor (26), at least one sensor (27) for the chemical composition of the combustion gases, and at least one sensor (28) for measuring the proportion of oxygen (O₂) in the exhaust gases.

8. An engine according to claim 1 or any one of claims 3 to 7, **characterised by** comprising at least one passage (12,14) provided inside said block (3) and said closure member (10), it being possible for a given liquid to flow through said passage (12,14); at least one sensor of said plurality of sensors (23) being disposed in such a way that it faces said passage (12,14).

9. An engine according to claim 2 or claim 8, **characterised in that** said plurality of sensors (23) comprises a plurality of tracks (31) for electrical connection between at least one sensor of said plurality of sensors (23) and the electronic unit (29) itself.

10. An engine according to claim 2 or claim 9, **characterised in that** said gasket (16) is substantially flat and made of composite multilayer material.

11. An engine according to claim 10, **characterised by** comprising a stroke sensor (32) connected electrically to said drive shaft (6); and it being possible for said electronic unit (29) to be connected electrically to said stroke sensor (32).

12. An engine according to claim 11, **characterised in that** said gasket (16) comprises a communication cable (33) which, in turn, comprises a feed channel adapted to supply electrical power to said plurality of sensors (23) and at least one electric communication channel connected to said electronic unit (29), by way of which the electronic unit (29) exchanges data with the exterior.

13. An engine according to claim 12, **characterised in that** said gasket (16) is bounded laterally in alignment with each cylindrical cavity (8) by an annular surface (18) which is of a diameter close to but exceeding a transverse dimension of said piston (7).

14. An engine according to claim 2 or 13, **characterised in that** at least one sensor of said plurality of sensors (23) and said electronic control unit (29) are made of substantially siliceous material

## Patentansprüche

1. Brennkraftmaschine (1) mit
einem Motorblock (3), der innen hohl ist, und einer in dem Block (3) aufgenommenen Betätigungsanordnung (5), mit mindestens einem Kolben (7), der sich in einer Hin- und Herbewegung in dem Block (3) bewegt, und einer Antriebswelle (6), die kinetisch mit dem Kolben (7) verbunden ist,
einem zylindrischen Hohlraum (8), der den Kolben (7) in einer frei verschiebbaren Art und Weise aufzunehmen vermag,
einem Element (10) zum Verschließen des Blocks (3), das starr mit dem Block (3) verbunden ist, um den zylindrischen Hohlraum (8) zu verschließen,
einer zwischen dem Block (3) und dem Verschlußelement (10) angeordneten Dichtung (16), um den zylindrischen Hohlraum (8) hermetisch abzuschließen,
einer innerhalb des Verschlußelements (10) vorgesehenen und den zylindrischen Hohlraum (8) zugewandten Kammer (11) zur Aufnahme eines entflammbaren Gemischs,
sowie mehreren Sensoren (23) zum Messen von Parametern physikalisch-chemischer Art,
**dadurch gekennzeichnet, daß** die Dichtung (16) mindestens eine elektrische Steuereinheit (29) aufweist, die mit den Sensoren (23) verbunden ist.

2. Maschine gemäß Anspruch 1, **dadurch gekennzeichnet, daß** mindestens ein Sensor der mehreren Sensoren (23) so angeordnet ist, daß er der Kammer (11) zugewandt ist.

3. Maschine gemäß Anspruch 1 oder 2, **dadurch gekennzeichnet, daß** die mehreren Sensoren (23) mindestens einen Drucksensor (25) umfassen.

4. Maschine gemäß Anspruch 1 oder 2, **dadurch gekennzeichnet, daß** die mehreren Sensoren (23) mindestens einen Temperatursensor (26) umfassen.

5. Maschine gemäß Anspruch 1 oder 2, **dadurch gekennzeichnet, daß** die mehreren Sensoren (23) mindestens einen Sensor (27) für die chemische Zusammensetzung der Verbrennungsgase umfassen.

6. Maschine gemäß Anspruch 1 oder 2, **dadurch gekennzeichnet, daß** die mehreren Sensoren (23) mindestens einen Sensor (28) zum Messen des Anteils an Sauerstoff (O₂) in den Abgasen umfassen.

7. Maschine gemäß Anspruch 1 oder 2, **dadurch gekennzeichnet, daß** die mehreren Sensoren (23) mindestens einen Temperatursensor (26), mindestens einen Sensor (27) für die chemische Zusammensetzung der Verbrennungsgase und mindestens einen Sensor (28) zum Messen des Anteils an Sauerstoff (O₂) in den Abgasen umfassen.

8. Maschine gemäß Anspruch 1 oder einem der Ansprüche 3 bis 7, **dadurch gekennzeichnet, daß** er mindestens einen Durchgang (12, 14) umfaßt, der innerhalb des Blocks (3) und des Verschlußelements (10) vorgesehen ist, wobei es möglich ist, daß eine gegebene Flüssigkeit durch den Durchgang (12, 14) fließen kann, und mindestens ein Sensor der mehreren Sensoren (23) derart angeordnet ist, daß er dem Durchgang (12, 14) zugewandt ist.

9. Maschine gemäß Anspruch 2 oder Anspruch 8, **dadurch gekennzeichnet, daß** die mehreren Sensoren (23) mehrere Spuren bzw. Leiterbahnen (31) für die elektrische Verbindung zwischen mindestens einem Sensor der mehreren Sensoren (23) und der eigentlichen elektronischen Einheit (29) aufweisen.

10. Maschine gemäß Anspruch 2 oder Anspruch 9, **dadurch gekennzeichnet, daß** die Dichtung (16) im wesentlichen flach und aus einem mehrschichtigen Verbundmaterial gefertigt ist.

11. Maschine gemäß Anspruch 10, **dadurch gekennzeichnet, daß** er einen Hubsensor (32) umfaßt, der elektrisch mit der Antriebswelle (6) verbunden ist, und eine elektrische Verbindung der elektronischen Einheit (29) mit dem Hubsensor (32) möglich ist.

12. Maschine gemäß Anspruch 11, **dadurch gekennzeichnet, daß** die Dichtung (16) ein Kommunikationskabel (33) umfaßt, das wiederum einen Zuführkanal aufweist, der den mehreren Sensoren (23) elektrische Energie zuzuführen vermag, sowie mindestens einen elektrischen Kommunikationskanal, der mit der elektronischen Einheit (29) verbunden ist und über den die elektronische Einheit (29) Daten mit der äußeren Umgebung austauscht.

13. Maschine gemäß Anspruch 12, **dadurch gekennzeichnet, daß** die Dichtung (16) seitlich in Ausrichtung mit jedem zylindrischen Hohlraum (8) durch eine ringförmige Oberfläche (18) umgrenzt ist, die einen Durchmesser aufweist, der einer Querschnittsabmessung des Kolbens (7) nahekommt, diese jedoch übertrifft.

14. Maschine gemäß Anspruch 2 oder 13, **dadurch gekennzeichnet, daß** mindestens ein Sensor der mehreren Sensoren (23) und die elektronische Steuereinheit (29) aus im wesentlichen siliziumdioxidhaltigem bzw. kiseligem Material gefertigt sind.

## Revendications

1. Un moteur thermique (1) comprenant un bloc moteur (3) creux intérieurement et un ensemble d'actionnement (5) logé à l'intérieur dudit bloc (3), et comprenant au moins un piston (7) se déplaçant en mouvement alternatif à l'intérieur dudit bloc (3), et un arbre d'entraînement (6) relié cinématiquement audit piston (7); une cavité (8) cylindrique, adaptée pour loger ledit piston (7) de manière à ce qu'il puisse se déplacer librement ; un élément (10) pour fermer ledit bloc (3), relié rigidement audit bloc (3), de manière à fermer ladite cavité cylindrique (8), un joint (16) disposé entre ledit bloc (3) et l'élément de fermeture (10), de manière à fermer hermétiquement ladite cavité cylindrique (8) *;* une chambre (11) prévue à l'intérieur dudit élément de fermeture (10) est tournée vers ladite cavité cylindrique de manière à contenir un mélange inflammable ; et une pluralité de capteurs (23) pour mesurer des paramètres de type physico-chimique; **caractérisé en ce que** ledit joint (16) incorpore au moins une unité de contrôle électronique (29) reliée audits capteurs (23).

2. Un moteur selon la revendication 1, **caractérisé en ce qu'**au moins un capteur de ladite pluralité de capteurs (23) est agencé pour être placé face à ladite chambre (11).

3. Un moteur selon la revendication 1 ou 2, **caractérisé en ce que** ladite pluralité de capteurs (23) comprend au moins un capteur de pression (25).

4. Un moteur selon la revendication 1 ou 2, **caractérisé en ce que** ladite pluralité de capteurs (23) comprend au moins un capteur de température (26).

5. Un moteur selon la revendication 1 ou 2, **caractérisé en ce que** ladite pluralité de capteurs (23) comprend au moine un capteur (27) appréhendant la composition chimique des gaz de combustion.

6. Un moteur selon la revendication 1 ou 2, **caractérisé en ce que** ladite pluralité de capteurs (23) comprend au moins un capteur (28) pour mesurer la proportion d'oxygène (O₂) dans les gaz d'échappement.

7. Un moteur selon la revendication 1 ou 2, **caractérisé en ce que** ladite pluralité de capteurs (23) comprend au moins un capteur de température (26), au moins un capteur (27) appréhendant la composition chimique des gaz de combustion ; et au moins un capteur (28) pour mesurer la proportion d'oxygène (O₂) dans les gaz d'échappement.

8. Un moteur selon la revendication 1 ou l'une quelconque des revendications 3 à 7, **caractérisé par** le fait de comprendre au moins un passage (12, 14) prévu à l'intérieur dudit bloc (3) et dudit élément de fermeture (10), étant possible à un liquide donné de s'écouler à travers ledit passage (12, 14); au moins un capteur de ladite pluralité des capteurs (23) étant disposé de manière à être tourné vers ledit passage (12, 14).

9. Un moteur selon la revendication 2 ou la revendication 8, **caractérisé en ce que** ladite pluralité de capteurs (23) comprend une pluralité de pistes (31) devant établir la liaison électrique entre au moins un capteur, parmi ladite pluralité de capteurs (23), et l'unité électronique (29) elle-même.

10. Un moteur selon la revendication 2 ou la revendication 9, **caractérisé en ce que** ledit joint (16) est pratiquement plat et est réalisé à partir d'un matériau multicouches composite.

11. Un moteur selon la revendication 10, **caractérisé par** le fait de comprendre un capteur de course de déplacement (32) relié électriquement audit arbre d'entraînement (6); et ladite unité électronique (29) pouvant être connectée électriquement audit capteur de course de déplacement (32).

12. Un moteur selon la revendication.11, **caractérisé en ce que** ledit joint (16) comprend un câble de communication (33) qui, à son tour, comprend un canal d'alimentation adapté pour fournir de la puissance électrique à ladite pluralité de capteurs (23) et au moins un canal de communication électrique relié à ladite unité électronique (29), au moyen de laquelle l'unité électronique (29) échange des données avec l'extérieur.

13. Un moteur selon la revendication 12, **caractérisé en ce que** ledit joint (16) est délimité latéralement en alignement avec chaque cavité cylindrique (8) par une surface annulaire (18) qui est d'un diamètre proche de, mais supérieur à la dimension transversale dudit piston (7).

14. Un moteur selon la revendication 2 ou 3, **caractérisé en ce que** ledit au moins capteur de ladite pluralité de capteurs (23) et ladite unité de contrôle électronique (29) sont réalisés en un matériau pratiquement à base de silicium.
